# EUROPÄISCHE PATENTSCHRIFT

(11) **EP 2 352 365 B1**
(45) Veröffentlichungstag und Bekanntmachung des Hinweises auf die Patenterteilung: **26.09.2012**
(21) Anmeldenummer: 09771659.1
(22) Anmeldetag: 26.11.2009
(51) Int. Cl.: A01C 7/04, A01C 7/10

(54) **EINZELKORNSÄMASCHINE**
INDIVIDUAL-GRAIN SEEDING MACHINE
SEMOIR MONOGRAIN

(30) Priorität: 05.12.2008 AT 18982008
(43) Veröffentlichungstag der Anmeldung: 10.08.2011
(73) Patentinhaber: Wintersteiger AG, 4910 Ried im Innkreis (AT)
(72) Erfinder: SPIESBERGER, Franz, A-4923 Lohnsburg (AT)
(74) Vertreter: Hübscher, Helmut
(86) Internationale Anmeldenummer: PCT/AT2009/000462
(87) Internationale Veröffentlichungsnummer: WO 2010/063047

(56) Entgegenhaltungen:
- WO-A1-01/41553
- FR-A1- 2 323 308
- US-A- 4 449 642

## Beschreibung

### Technisches Gebiet

Die Erfindung bezieht sich auf eine Einzelkornsämaschine mit einer eine Stirnwand eines Saatgutbehälters bildenden Säscheibe, die einen feststehenden, auf der dem Saatgutbehälter abgekehrten Seite besaugten Scheibenkörper mit zumindest einem Führungsschlitz und eine auf der Seite des Saatgutbehälters am Scheibenkörper anliegende, um eine liegende Achse antreibbare Förderscheibe mit über den Umfang verteilten, sich über den radialen Erstreckungsbereich des Führungsschlitzes erstreckenden Mitnehmerschlitzen umfasst, die im Überdeckungsbereich mit dem Führungsschlitz Ansaugöffnungen für die entlang des Führungsschlitzes aus dem Saatgutbehälter austragbaren Saatkörner bilden.

### Stand der Technik

Um eine sichere Vereinzelung von Saatkörnern und eine gleichmäßige Austragung der vereinzelten Saatkörner zu erreichen, ist es bei Einzelkornsämaschinen bekannt (WO 2001/041553 A1), die Säscheibe in einen feststehenden Scheibenkörper und eine an diesem Scheibenkörper anliegende Förderscheibe zu unterteilen, die mit radialen Mitnehmerschlitzen versehen ist. Da der Scheibenkörper mit einer sich über einen Umfangsbereich erstreckenden, eine Austragsbahn für die Saatkörner bildenden Führungsschlitz versehen ist, der auf der von der Förderscheibe abgekehrten Seite besaugt wird, ergeben sich im Überdeckungsbereich der Mitnehmerschlitze mit dem Führungsschlitz Ansaugöffnungen für die Saatkörner, die entlang des Führungsschlitzes aus dem an die Säscheibe angeschlossenen Saatgutbehälter ausgetragen werden. Die an die Ansaugöffnungen angesaugten Saatkörner kommen dabei sowohl mit dem feststehenden Scheibenkörper als auch mit der drehenden Förderscheibe in Berührung, was zu einer Drehung der angesaugten Saatkörner mit der Wirkung führt, dass eines der an eine Ansaugöffnung angesaugten Saatkörner unter einer Verdrängung der übrigen Saatkörner die Ansaugöffnung abdeckt, während die übrigen Saatkörner in den Saatgutbehälter zurückfallen. Nachteilig ist allerdings, dass der Saatgutbehälter nur über die Säscheibe entleert werden kann, wenn die Saatkörner beispielsweise am Ende einer Parzelle nicht mehr gebraucht werden.

Bei Einzelkornsämaschinen mit einer besaugten Säscheibe zum Austragen vereinzelter Saatkörner aus einem Saatgutbehälter ist es bekannt (US 7 111 567 B2) den Saatgutbehälter um eine gegenüber der Säscheibenachse exzentrische Achse zu verschwenken, sodass die für den Einzelkornaustrag mit Hilfe der Säscheibe nach oben gerichtete, umfangsseitige Austragsöffnung des Saatgutbehälters nach seinem Verschwenken mit der Wirkung nach unten weist, dass die restlichen Saatkörner aus dem Saatgutbehälter fallen und der Saatgutbehälter entleert wird. Dieser um eine exzentrische Achse verschwenkbare Saatgutbehälter bringt nicht nur einen erheblichen Konstruktionsaufwand mit sich, sondern setzt auch Säscheiben voraus, deren Ansauglöcher für die Saatkörner entlang eines zur Säscheibe konzentrischen Teilkreises angeordnet sind.

### Darstellung der Erfindung

Der Erfindung liegt somit die Aufgabe zugrunde eine Einzelkornsämaschine der eingangs geschilderten Art mit vergleichsweise einfachen Konstruktionsmitteln so auszugestalten, dass eine vorteilhafte Restentleerung des Saatgutbehälters ermöglicht wird, ohne den Einzelkornaustrag entlang des Führungsschlitzes zu behindern.

Die Erfindung löst die gestellte Aufgabe dadurch, dass der Saatgutbehälter einen Boden in Form einer koaxial zur Säscheibe zwischen einer Schließ- und einer Öffnungsstellung verschwenkbaren Entleerklappe aufweist.

Da der Saatgutbehälter mit einer bodenseitigen Entleerklappe versehen ist, ergeben sich einfache Konstruktionsverhältnisse, zumal die Entleerklappe koaxial zur Säscheibe gelagert und durch ein Drehen um die Säscheibenachse zwischen der Schließ- und der Öffnungsstellung verlagert werden kann, ohne den Saatgutaustrag aus dem Saatgutbehälter entlang des Führungsschlitzes zu gefährden, der im Ansaugbereich der Saatkörner aus dem Saatgutbehälter nahe der Säscheibenachse verlaufen soll, um aufgrund einer geringen Relativgeschwindigkeit zwischen Säscheibe und Saatgut ein sicheres Ansaugen der einzelnen Saatkörner an die Ansaugöffnungen der Säscheibe zu unterstützen. Die sich in die Öffnungsstellung drehende Entleerklappe kann außerdem aufgrund ihrer Neigung eine vorteilhafte Führung für die aus dem Saatgutbehälter auszutragenden Restkörner bilden, was insbesondere für eine schwerkraftbedingte Entleerung von Interesse ist.

Um zu verhindern, dass bei geöffneter Entleerklappe Saatgut in den Saatgutbehälter eingefüllt wird, kann die Entleerklappe mit einem Verschluss für eine Füllöffnung in der der Säscheibe gegenüberliegenden Stirnwand des Saatgutbehälters antriebsverbunden sein, wobei der Verschluss die Füllöffnung in der Schließstellung der Entleerklappe freigibt, in der Öffnungsstellung der Entleerklappe aber verschließt.

Damit im Bereich des Saatgutbehälters an die Säscheibe angesaugte Saatkörner beim Öffnen der Entleerklappe ebenfalls aus dem Saatgutbehälter ausgetragen werden, kann die Entleerklappe mit einem Abstreifer für an die Säscheibe angesaugte Saatkörner antriebsverbunden sein. Die Antriebsverbindung zwischen der Entleerklappe einerseits und dem Verschluss für die Füllöffnung und dem Abstreifer anderseits kann in einfacher Weise dadurch sichergestellt werden, dass die Entleerklappe aus einem Formkörper besteht, der den Verschluss und den Abstreifer bildet. Eine solche Ausführungsform ist aber nicht zwingend.

### Kurze Beschreibung der Zeichnung

In der Zeichnung ist der Erfindungsgegenstand beispielsweise dargestellt. Es zeigen
- Fig. 1: eine erfindungsgemäße Einzelkornsämaschine ausschnittsweise im Bereich der Säscheibe in einer schematischen Ansicht in Richtung der Säscheibenachse,
- Fig. 2: einen vereinfachten Schnitt nach der Linie II-II der Fig. 1 in einem vergrößerten Maßstab,
- Fig. 3: einen vereinfachten Schnitt nach der Linie III-III der Fig. 2 in einem kleineren Maßstab und
- Fig. 4: eine der Fig. 3 entsprechende Darstellung der Einzelkornsämaschine, jedoch mit geöffneter Entleerklappe.

### Weg zur Ausführung der Erfindung

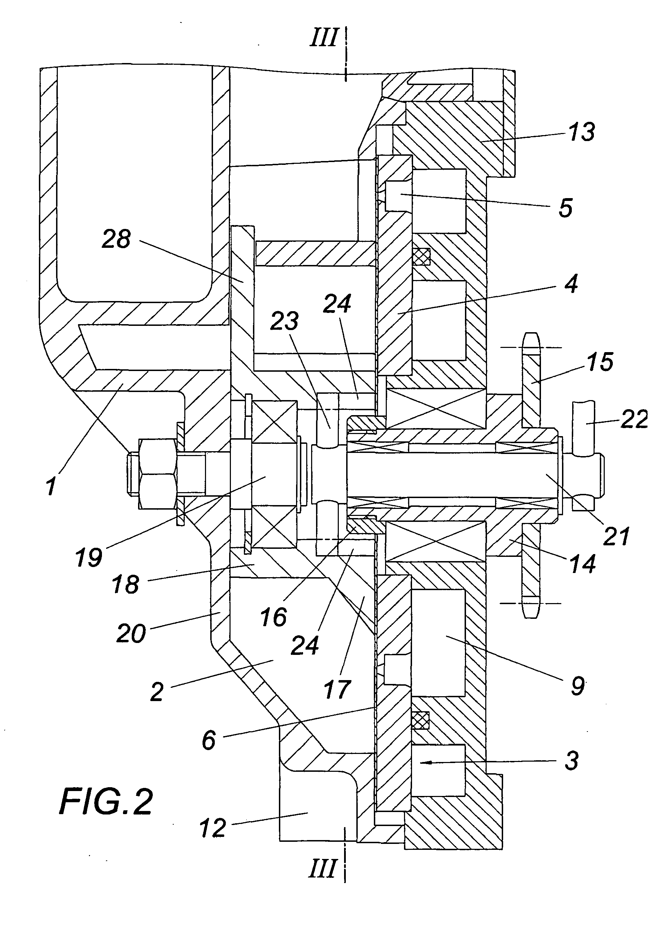

Die dargestellte Einzelkornsämaschine weist im Säscheibenbereich ein Gehäuse 1 auf, das einen Saatgutbehälter 2 bildet, und durch eine Säscheibe 3 stirnseitig abgedeckt wird. Diese Säscheibe 3 setzt sich aus einem gehäusefesten Scheibenkörper 4 mit einem Führungsschlitz 5 und einer Förderscheibe 6 zusammen, die mit sich über den radialen Erstreckungsbereich des Führungsschlitzes 5 erstreckenden, im Wesentlichen radial verlaufenden Mitnehmerschlitzen 7 versehen ist. Im Überdeckungsbereich zwischen dem Führungsschlitz 5 und den Mitnehmerschlitzen 7 ergeben sich somit Ansaugöffnungen 8 für in den Saatgutbehälter 2 gefüllte Saatkörner. Zum Ansaugen der Saatkörner an die Ansaugöffnungen 8 ist eine Unterdruckkammer 9 auf der dem Saatgutbehälter 2 abgewandten Seite der Säscheibe 3 vorgesehen, wie dies der Fig. 2 entnommen werden kann. Die Saatkörner werden im Bodenbereich des Saatgutbehälters 2 an die Ansaugöffnungen 8 unter einer Vereinzelung der Saatkörner angesaugt, wenn die Mitnehmerschlitze 7 während der Drehung der Förderscheibe 6 in Förderrichtung 10 in den Bereich des Saatgutbehälters 2 gelangen. Die angesaugten, vereinzelten Saatkörner werden dann entlang des Führungsschlitzes 5 aus dem Saatgutbehälter 2 ausgefördert und fallen am austragsseitigen Ende 11 des Führungsschlitzes 5 von der Förderscheibe 6 in einen Austragsschacht 12 ab.

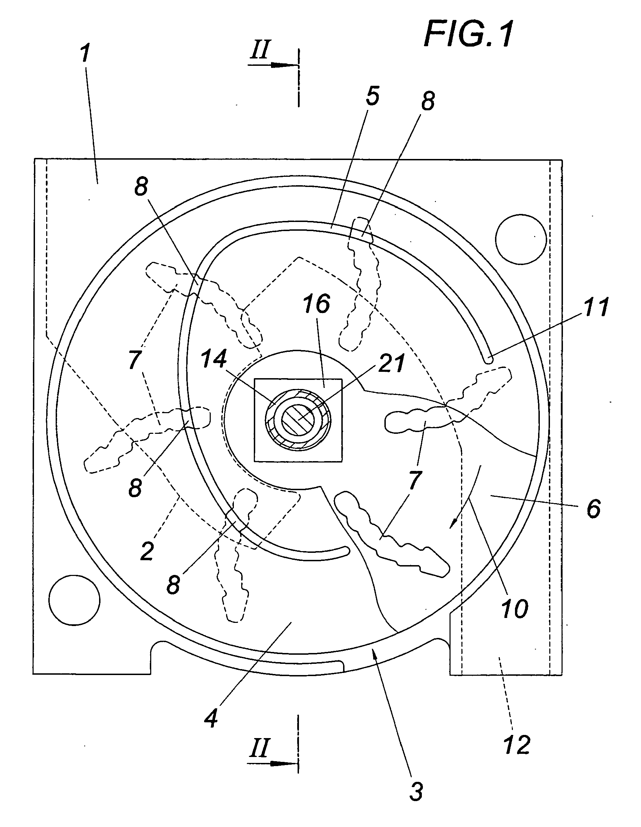

Zum Antrieb der Förderscheibe 6 dient eine im die Unterdruckkammer 9 bildenden Gehäusedeckel 13 gelagerte Hohlwelle 14, die über ein Kettenrad 15 angetrieben wird. Die Drehmitnahme der Förderscheibe 6 wird durch eine Vierkantmutter 16 sichergestellt, die in eine entsprechende rechtwinkelige Öffnung der Förderscheibe 6 eingreift, wie dies insbesondere der Fig. 1 entnommen werden kann.

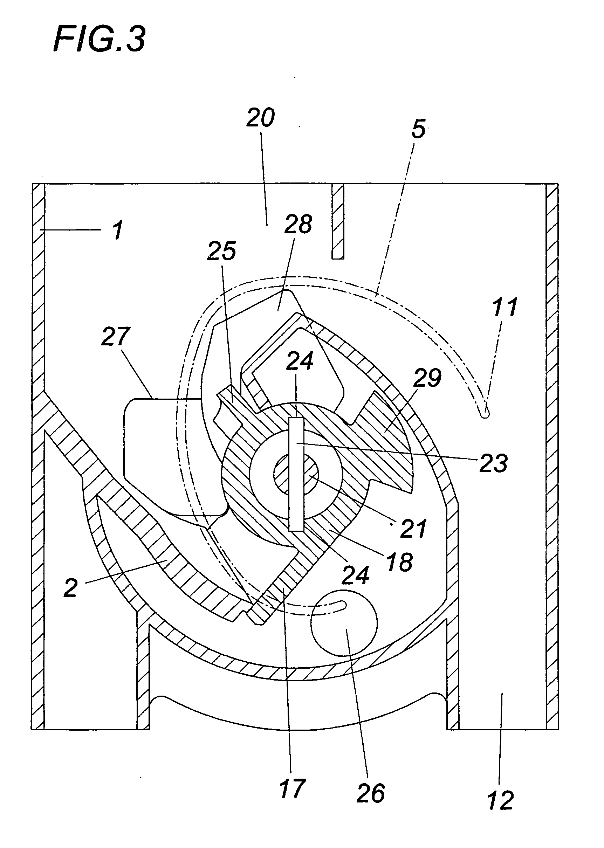

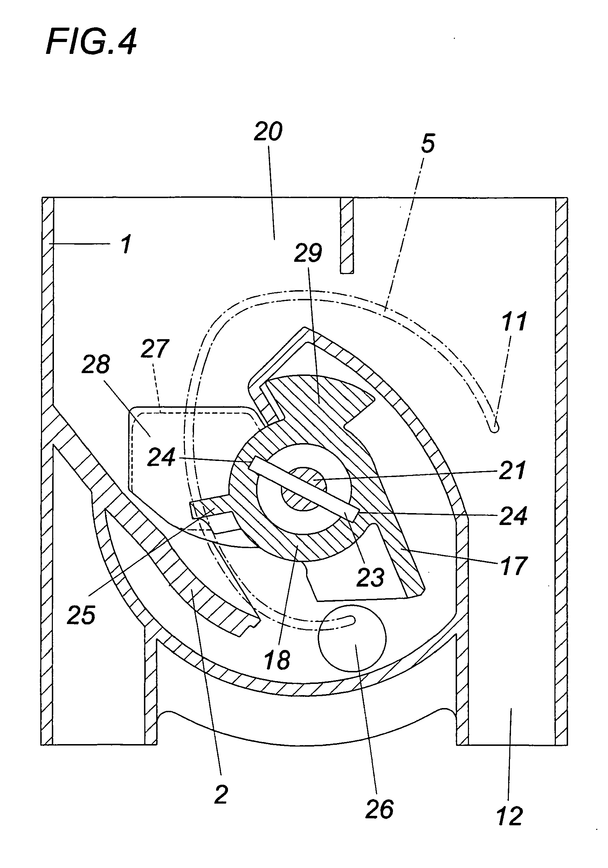

Um den Saatgutbehälter 2 beispielsweise am Ende einer Parzelle vollständig entleeren zu können, weist der Boden des Saatgutbehälters 2 eine koaxial zur Säscheibe 3 verschwenkbare Entleerklappe 17 auf. Diese Entleerklappe 17 wird von einer Hülse 18 getragen, die drehbar auf einer zur Hohlwelle 14 koaxialen Achse 19 drehbar gelagert ist. Diese Achse 19 ist entsprechend der Fig. 2 in der der Säscheibe 3 gegenüberliegenden Stirnwand 20 des Gehäuses 1 befestigt. Zur Schwenkverstellung der Entleerklappe 17 zwischen einer in der Fig. 3 dargestellten Schließstellung und einer in der Fig. 4 gezeichneten Öffnungsstellung ist eine Schwenkwelle 21 vorgesehen, die in der Hohlwelle 14 drehbar gelagert ist und über einen Schwenkarm 22 beispielsweise mit Hilfe eines Schwenkzylinders betätigt werden kann. Das aus der Hohlwelle 14 vorragende Ende der Schwenkwelle 21 trägt einen Mitnehmerbolzen 23, der in Mitnehmeraussparungen 24 der Hülse 18 eingreift. Durch ein Betätigen der Schwenkwelle 21 kann somit die Entleerklappe 17 zum Entleeren des Saatgutbehälters 2 in die Öffnungsstellung nach der Fig. 4 verschwenkt werden.

Wie den Fig. 3 und 4 entnommen werden kann, ist die Hülse 18 mit einem Abstreifer 25 versehen, der bei der Schwenkverstellung der Entleerklappe 17 in die Öffnungsstellung über den Bereich des Führungsschlitzes 5 gedreht wird, sodass in diesem Bereich an die Ansaugöffnungen 8 angesaugte Saatkörner von der Förderscheibe 6 abgestreift und zusammen mit dem restlichen Saatgut aus dem Saatgutbehälter 2 ausgetragen werden. Diese Austragung kann schwerkraftbedingt über einen Entnahmeschacht erfolgen. Im dargestellten Ausführungsbeispiel werden allerdings die restlichen Saatkörner aus dem Gehäuse 1 über eine Absaugleitung abgesaugt, deren Mündungsöffnung 26 in den Fig. 3 und 4 angedeutet ist.

Die Befüllung des Saatgutbehälters 2 mit Saatkörnern erfolgt durch einen Füllschacht des Gehäuses 1, der in herkömmlicher Weise über eine Füllöffnung 27 in der Stirnwand 20 des Gehäuses 1 in den Saatgutbehälter 2 mündet. Um ein Befüllen des Saatgutbehälters 2 bei geöffneter Entleerklappe 17 zu unterbinden, trägt die Hülse 18 einen Verschluss 28 für die Füllöffnung 27 in Form einer von der Hülse 18 radial abstehenden Schließplatte, die beim Öffnen der Entleerklappe 17 vor die Füllöffnung 27 verschwenkt wird.

Um für die Montage die Schließstellung der Entleerklappe 17 zu sichern, ist die Hülse 18 mit einem Gegengewicht 29 zur Schließplatte 27 ausgestattet, das die Hülse mit der Entleerplatte 17 mit einem im Schließsinn wirksamen Schließmoment beaufschlagt.

## Patentansprüche

1. Einzelkornsämaschine mit einer eine Stirnwand eines Saatgutbehälters (2) bildenden Säscheibe (3), die einen feststehenden, auf der dem Saatgutbehälter (2) abgekehrten Seite besaugten Scheibenkörper (4) mit zumindest einem Führungsschlitz (5) und eine auf der Seite des Saatgutbehälters (2) am Scheibenkörper (4) anliegende, um eine liegende Achse antreibbare Förderscheibe (6) mit über den Umfang verteilten, sich über den radialen Erstreckungsbereich des Führungsschlitzes (5) erstreckenden Mitnehmerschlitzen (7) umfasst, die im Überdeckungsbereich mit dem Führungsschlitz (5) Ansaugöffnungen (8) für die entlang des Führungsschlitzes (5) aus dem Saatgutbehälter (2) austragbaren Saatkörner bilden, **dadurch gekennzeichnet, dass** der Saatgutbehälter (2) einen Boden in Form einer koaxial zur Säscheibe (3) zwischen einer Schließ- und einer Öffnungsstellung verschwenkbaren Entleerklappe (17) aufweist.

2. Einzelkornsämaschine nach Anspruch 1, **dadurch gekennzeichnet, dass** die Entleerklappe (17) mit einem Verschluss (28) für eine Füllöffnung (27) in der der Säscheibe (3) gegenüberliegenden Stirnwand (20) des Saatgutbehälters (2) antriebsverbunden ist, wobei der Verschluss (28) die Füllöffnung (27) in der Schließstellung der Entleerklappe (17) freigibt, in der Öffnungsstellung der Entleerklappe (17) aber verschließt.

3. Einzelkornsämaschine nach Anspruch 1 oder 2, **dadurch gekennzeichnet, dass** die Entleerklappe (17) mit einem Abstreifer (25) für an die Säscheibe (3) angesaugte Saatkörner antriebsverbunden ist.

## Claims

1. Single-grain sowing machine having a sowing disc (3) forming an end wall of a seed hopper (2) and including a fixed disc body (4) - which is suctioned on the side facing away from the seed hopper (2) and has at least one guide slot (5) - and a conveyor disc (6), which lies against the disc body (4) on the side of the seed hopper (2), can be driven about a horizontal axis and has entrainment slots (7) distributed over the circumference and extending over the radial extension area of the guide slot (5), which entrainment slots form, in the overlap area with the guide slot (5), intake openings (8) for the seed grains which can be dispensed along the guide slot (5) from the seed hopper (2), **characterised in that** the seed hopper (2) has a floor in the form of an emptying flap (17), which can be pivoted coaxially to the sowing disc (3) between a closed position and an open position.

2. Single-grain sowing machine as claimed in Claim 1, **characterised in that** the emptying flap (17) is drivingly connected to a closure (28) for a filling opening (27) in the end wall (20) of the seed hopper (2) opposite to the sowing disc (3), wherein the closure (28) exposes the filling opening (27) when the emptying flap (17) is in the closed position but closes it when the emptying flap (17) is in the open position.

3. Single-grain sowing machine as claimed in Claim 1 or 2, **characterised in that** the emptying flap (17) is drivingly connected to a stripper (25) for seed grains suctioned onto the sowing disc (3).

## Revendications

1. Semoir monograin avec un disque à grains (3) formant une paroi frontale d'un réservoir à semences (2) qui comprend un corps de disque (4) fixe, aspirant sur le côté opposé au réservoir à semences (2) avec au moins une rainure de guidage (5), et un disque convoyeur (6), sur le côté du réservoir à semences (2), adjacent au corps de disque (4), pouvant être entraîné autour d'un axe horizontal, avec des rainures d'entraînement (7) réparties sur la périphérie, s'étendant au-dessus de la zone d'extension radiale de la rainure de guidage (5) et formant dans la zone de recouvrement avec la rainure de guidage (5) des ouvertures d'aspiration (8) pour les graines de semence pouvant être déchargées le long de la rainure de guidage (5), du réservoir à semences, **caractérisé en ce que** le réservoir à semences (2) présente un fond sous forme d'un volet de vidage (17) pouvant pivoter, coaxialement au disque à grains (3) entre une position de fermeture et une position d'ouverture.

2. Semoir monograin selon la revendication 1, **caractérisé en ce que** le volet de vidage (17) est relié en entraînement à un dispositif obturateur (28) pour une ouverture de remplissage (27) dans la paroi frontale (20), opposée au disque à grains (3), du réservoir à semences (2), le dispositif obturateur (28) dégageant l'ouverture de remplissage (27) dans la position de fermeture du volet de vidage (17), mais, fermant le volet de vidage (17) dans la position d'ouverture.

3. Semoir monograin selon la revendication 1 ou 2, **caractérisé en ce que** le volet de vidage (17) est relié en entraînement à un racleur (25) pour des graines de semence aspirées au niveau du disque à grains (3).
